# EUROPÄISCHE PATENTANMELDUNG

(11) **EP 2 840 723 A1**
(43) Veröffentlichungstag der Anmeldung: **25.02.2015**
(21) Anmeldenummer: 13004130.4
(22) Anmeldetag: 20.08.2013
(51) Int. Cl.: H04B 7/185

(54) **Versorgung von Flugzeugen mit Telefonie und Breitbandinternet Diensten mittels Nutzung Frequenzen in dem 6 GHz Bereich.**

(71) Anmelder: Herbst, Martin, 5090 Lofer (AT)
(72) Erfinder: Herbst, Martin, 5090 Lofer (AT)

(57) **Zusammenfassung**

Die xfly Technologie dient zu einer störungsfreien Kommunikation in Luftfahrzeugen und bietet somit einen wichtigen Service für alle Airlines und Flugreisenden an. Das System beinhaltet die komplette Funktionsweise für den Einsatz. Endnutzer können das System mit allen gängigen WLAN Geräten im Flugzeuginneren störungsfrei nutzen.

Durch entsprechenden Einsatz von Hardware kann das System für viele weitere Datenintensiven Statistiken, Forschungen und Dienstleistungen zwischen Flugzeug und Erde dienen.

## Beschreibung

Die Erfindung xfly dient dazu, dass Flugzeuge mit Telefonie und Breitbandinternet störungsfrei mittels Nutzung freier Frequenzen im 6 GHz Bereich durch Anbringung von leistungsfähigen Outdoor Antennen (in einem Abstand von jeweils 50 km angebracht), Antennen am Flugzeug (auf der Flugzeugaußenhaut je nach Modell) und Übertragungsprotokollen (damit Übertragungsstrecken bis ca. 15 km beachtet werden und das gegenseitige Stören im gleichen Frequenzbereich vermieden wird), versorgt werden.

Die Reichweite der Antennen beträgt 20 km. Es handelt sich bei den Antennen um sogenannte Beamforming- Antennen, die sowohl am Boden bei einer Basisstation (Glasfaserkabeln=Lichtwellenleiter LWL) als auch am Flugzeug (Flugzeugaußenhaut) angebracht wird.

Die Antennen selbst bestehen aus einer Fläche von circa 50 x 50, welche infolge der hintereinander geschalteten Dipole und in Folge der elektronischen Ansteuerung das Ein- und Ausschalten der Dipole in die Hauptstrahlrichtung im Winkel von 48° verändern können. Dies geschieht ohne mechanischen Einfluss, sondern durch Ein und Ausschalten beziehungsweise elektronischer Steuerung der Antennenelemente.

Die Antennen arbeiten zusätzlich nach dem extended Input und Outputprinzip. Nach dieser Technik ist es möglich, zeitlich horizontal und vertikal die Signale zu empfangen und zu senden. Die Antennen sind erstmals beweglich und den Luftfahrzeugen angepasst und werden je nachdem durch Einbauwinkel .inklusive Rundungen in der Grundmatrix jeweils programmiert.

In einem Verfahren in Verbindung mit High Speed VPN übermitteln 64 Streamingkanäle gleichzeitig die benötigten Daten.

Weiters kommt ein übergeordnetes Traffic-Visualsystem zur Anwendung bei dem sich die Kamera am Boden im Abstand von jeweils 50 km montiert befindet (Schaltpunkte zur nächsten Basis). Die Basisstationen sind vorrangig bei Flughäfen angebunden beziehungsweise montiert. Dient zur Anwendungen für Internet, Telefonie und ein IP-TV, Datensysteme und GPS usw. übergeordnetes Visualsystem inklusive GPS und Galileo und weitere Anwendung Infrarotkamera.

Hauptverwendung ist die Versorgung der Luftfahrzeuge mit Echtzeitdaten beziehungsweise der Austausch von Echtzeitdaten. Im Flugzeug können alle Personen Internet, Telefonie und mit Datendienste gleich wie am Boden nutzen mit einer Datenübertragung mit mindestens 100 MBit derzeit bis zu 2,8 GBit. Ein weiteres Anwendungsgebiet ist die Flugdatenübermittlung und zusätzliche Position und Geschwindigkeitsbestimmung. Im Inneren befindet sich eine WLAN Antenne in ihrem 2,4 und 5 GHz Bereich zur Nutzung aller mit 0,1 W Sendeleistung.

Das Anwendungsgebiet ist für Wirtschaft, Forschung, Verkehr, Umwelt und Tourismus von großer Bedeutung.

Neben der Funktion als Breitbandinternetversorgung und Telefonie dient der xfly auch zur Verkehrsüberwachung, zur Erstellung von Wetter-Emissions und Umweltdaten. Es kann weiters durch xfly eine zentrale Gesundheitsdatenbank erstellt werden, welche nahezu eine lückenlose Aufzeichnung der Pollenwerte und Luftgütermenge in verschiedenen Schichten ermöglicht. Durch Google lässt sich nämlich eine präzise Aussage von Luft- und Umweltqualität für Mensch und Tier errechnen. Ebenfalls kann damit eine optimale Bewirtschaftung von Agrarflächen sowie deren Einfluss auf CO² Gehalt erstellt werden.

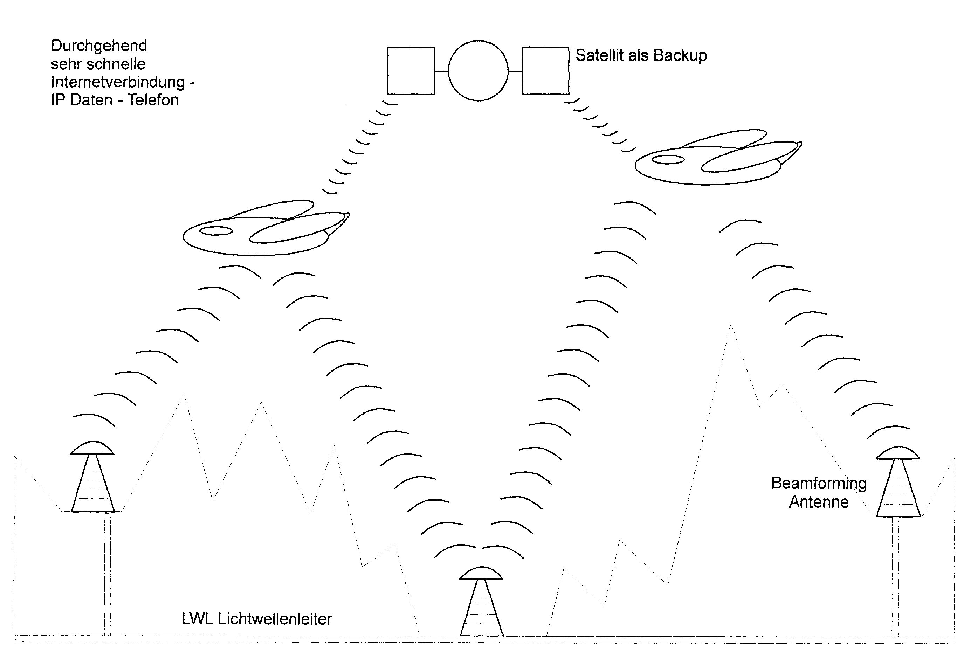

## Patentansprüche

1. Name xfly;

2. Versorgung der Flugzeuge mit Telefonie und Breitbandinternet mittels Nutzung freier Frequenzen im 6 GHz Bereich sowie

3. Verkehrsüberwachung, zur Erstellung von Wetter-Emissions und Umweltdaten, Erstellung einer zentralen Gesundheitsdatenbank, für eine lückenlose Aufzeichnung der Pollenwerte und Luftgütermenge in verschiedenen Schichten und optimale Bewirtschaftung von Agrarflächen sowie deren Einfluss auf CO² Gehalt.

4. Anbringung von Beamforming-Antennen am Boden durch Glasfaserkabeln = Lichtwellenleiter LWL und

5. Anbringung von Beamforming-Antennen am Flugzeug (Flugzeugaußenhaut) je nach Modell;

6. Die Antennen sind beweglich und den Luftfahrzeugen angepasst und werden je nachdem durch Einbauwinkel inklusive Rundungen in der Grundmatrix jeweils programmiert.

7. Die Antennen arbeiten nach dem extended Input und Outputprinzip. zeitlich horizontal und vertikal die Signale zu empfangen und zu senden.

8. Übertragungsprotokollen damit Übertragungsstrecken bis ca. 15 km beachtet werden und das gegenseitige Stören im gleichen Frequenzbereich vermieden wird.

9. Kommt ein übergeordnetes Traffic-Visualsystem zur Anwendung bei dem sich die Kamera am Boden im Abstand von jeweils 50 km montiert befindet (Schaltpunkte zur nächsten Basis). Die Basisstationen sind vorrangig bei Flughäfen angebunden beziehungsweise montiert.
